# EUROPEAN PATENT SPECIFICATION

(11) **EP 3 104 621 B1**
(45) Date of publication and mention of the grant of the patent: **24.04.2019**
(21) Application number: 15196757.7
(22) Date of filing: 27.11.2015
(51) Int. Cl.: H04N 21/442, H04N 21/4728, H04N 21/4402, H04N 21/4545

(54) **METHOD AND DEVICE FOR DYNAMICALLY CONTROLLING QUALITY OF A VIDEO**
VERFAHREN UND VORRICHTUNG ZUR DYNAMISCHEN STEUERUNG DER QUALITÄT EINES VIDEOS
PROCÉDÉ ET DISPOSITIF POUR COMMANDER DE FAÇON DYNAMIQUE LA QUALITÉ D'UNE VIDÉO

(30) Priority: 09.06.2015 IN 2866CH2015; 30.07.2015 US 201514813524
(43) Date of publication of application: 14.12.2016
(73) Proprietor: Wipro Limited, 560 035 Karnataka (IN)
(72) Inventor: IYER, Manjunath Ramachandra, 560085 Karnataka (IN); RAVI, Jijith Nadumuri, 421301 Maharashtra (IN); GARG, Vijay, 411014 Maharashtra (IN)
(74) Representative: Finnegan Europe LLP

(56) References cited:
- DE-A1-102013 105 638
- US-A1- 2007 162 922
- US-A1- 2009 300 692
- US-A1- 2010 061 553
- US-A1- 2012 146 891
- US-A1- 2014 253 694
- US-A1- 2014 270 528
- US-B1- 6 664 955
- US-B1- 8 184 069

## Description

### TECHNICAL FIELD

The present subject matter is related in general to a display device and more particularly, but not exclusively, to systems and methods for dynamically controlling the quality of a video displaying on a display associated with an electronic device.

### BACKGROUND

Presently, a high definition (HD) video consumes a large bandwidth for downloading and high computational power to reconstruct. For example, 30 seconds of data at 120 Hz leads to uncompressed size of more than twenty gigabytes. To reduce the complexity with the HD video, a variety of methods or techniques have been developed.

In general, due to vision foveation, the sensitivity of the human visual system is confined to a small region around a point of gaze and falls off rapidly around the same. One known arrangement provides an apparent resolution enhancement for predetermined regions of the video. In another known arrangement, a model spanning the optical flow of objects is provided. Another known arrangement provides an adoption of foveated video coding for video compression, which generates fixation points automatically.

A video with higher frame rates may significantly increase the quality of experience. The human eye integrates the rendered images. It calls for providing lesser weight for transient images when the eye is moving. On the same lines, the first few frames at a new position may be given lesser weightage.

Consider a user having a digital device, such as, but not limited to, a mobile, tablet, personal digital assistant and any other device that can support standard definition (SD) as well as high definition (HD). However, due to bandwidth issues, the device is unable to support or render HD quality video. The SD video may take about 1- 2.5 Mbps for transmission, while the HD video may take in the range of 12-16 Mbps, which is about 10 times higher.

The existing devices do not render high quality video with limited bandwidth. This may be relevant for a consumer of an entertainment video, or for education, a medical image, police patrolling, marketing research, advertising, and social networking, where often bandwidth issues for the consumption of high quality video content may be encountered.

Hence, there exists a need to offer a device to provide high quality (HD) video with limited bandwidth which is not sufficient to support HD.

US 2012/0146891 A1 discloses methods and systems for adapting a display screen output based on the focus of the user's attention on the display screen. Using gaze tracking, sub-regions of the display screen focused on by the user are determined. The display screen output is then adapted by changing the quantity of data representing objects displayed within the so identified sub-regions relative to objects displayed in the remaining sub-regions of the display screen.

US 2009/0300692 A1 discloses a streaming video source providing, to a user device, streaming data representing a sequence of images, where each image includes a plurality of individually decodable slices, less than all of the plurality of individually decodable slices are displayed at the user device, for a particular image and a corresponding subset region of the image, in response to a current input indicative of the subset region. Future input indicative of a revised subset region is then predicted in response to images in the image sequence that have yet to be displayed and to previously received input.

US 2010/0061553 discloses systems and methods for providing video content while inhibiting the copying of that content for later viewing by the omission or addition of content developed in relation to the particular initial viewing.

DE 102013105638 A1 discloses a method for increasing a perceived resolution of a video image sequence. The method includes determining a foveal view area, determining and averaging an optical flow in the foveal view area, and then inserting a virtual artificial movement into the video image sequence to increase its perceived resolution.

US 2014/0270528 A1 discloses identifying regions of text in an image captured by a camera, analyzing such identified regions for poor text recognition, such as poor contrast, blur, noise, and the like, and automatically applying image quality enhancement to the regions with poor quality text recognition.

### SUMMARY

The embodiments described herein are examples of the invention. The invention is defined in the appended claims. In one aspect, there is provided a method for dynamically controlling the quality of a video displaying on a display associated with an electronic device, comprising: detecting, by a display device, the current eye position of a user; identifying, by the display device, at least one region of interest (ROI) on a display screen of the display device based on the current eye position of the user; predicting, by the display device, the next position of the eye based on at least one of the current eye position of the user or the at least one ROI and based on a rate of movement of the eye of the user of a user profile of the user, the user profile defining the rate of movement of the eye of the user pre-learned based on relative motion of the eye of the user detected with respect to moving objects displayed on the display screen during transients; converting, by the display device, the video having a first definition into a video having a second, higher definition displayed on the ROI on the display screen associated with the current and next position of the eye; and displaying, by the display device, the second, higher definition video on the ROI of the display screen. The video having the first definition may comprise standard definition (SD) video. The video having the second, higher definition may comprise high definition (HD) video. The method may further comprise processing the second, higher definition video for rendering higher definition content on the ROI and lower definition content in the non-ROI.

In an aspect of the present disclosure, a method for dynamically controlling the quality of a video displaying on a display associated to an electronic device is provided. The method comprises detecting the current eye position of a user and identifying at least one region of interest (ROI) on a display screen of the display device based on the current eye position of the user. Then, the method comprises predicting the next position of the eye based on at least one of the current eye position of the user or the at least one ROI. Also, the method comprises converting the SD video into a high definition (HD) video displayed on the ROI on the display screen associated with the current and next position of the eye. Further, the method comprises displaying the HD video on the ROI of the display screen.

In an embodiment of the present disclosure, a display device for dynamically controlling quality of a video is provided. The display device comprises a processor and a memory communicatively coupled to the processor. The memory stores processor-executable instructions, which, on execution, cause the processor to detect the current eye position of a user, identify at least one region of interest (ROI) on a display screen of the display device based on the current eye position of the user, predict the next position of the eye based on at least one of the current eye position of the user or the at least one ROI and based on a rate of the movement of the eye of the user of a user profile of the user, the user profile defining the rate of movement of the eye of the user pre-learned based on relative motion of the eye of the user detected with respect to moving objects displayed on the display screen during transients, convert the SD video into a high definition (HD) video displayed on the ROI on the display screen associated with the current and next position of the eye and display the HD video on the ROI of the display screen.

There is also provided a display device for dynamically controlling quality of a video, comprising: a processor; and a memory communicatively coupled to the processor, wherein the memory stores processor-executable instructions, which, on execution, cause the processor to: detect current eye position of a user; identify at least one region of interest (ROI) on a display screen of the display device based on the current eye position of the user; predict next position of the eye based on at least one of the current eye position of the user or the at least one ROI and based on a rate of the movement of the eye of the user of a user profile of the user, the user profile defining the rate of movement of the eye of the user pre-learned based on relative motion of the eye of the user detected with respect to moving objects displayed on the display screen during transients; convert the SD video into a high definition (HD) video displayed on the ROI on the display screen associated with the current and next position of the eye; and display the HD video on the ROI of the display screen.

The processor may be configured to detect the current eye position of the user by at least one motion detector, using one of an optical eye tracking, a pattern mapping and a gaze-based interface technique.

The processor may be configured to identify at least one region of interest (ROI) on a display screen by performing using binary space partitioning method.

The processor may be configured to display the SD video in the non-ROI of the display screen.

The processor may be configured to predict the next dwell position of the eye comprising: receiving at least one of, one or more parameters associated with the SD video displayed on the display screen and at least one user profile; and predicting the next position of the eye based on the one or more parameters, the at least one user profile and at least one resource; and obtaining one or more frames of the SD video based on the predicted next position of the eye using an artificial neural network.

The one or more parameters may comprise present coordinates on the display screen, plurality of motion vectors in one of neighboring pixels and objects, frame color and color change in the frames of the SD video.

The processor may be configured to convert the SD video into a high definition (HD) video comprising: performing spatial up-sampling at least one of a plurality of frames in the ROI and a plurality of frames in an at least one ROI associated with the next position of the eye.

The spatial up-sampling of the plurality of frames may be performed by an interpolating technique.

The processor may be configured to process the HD video for rendering high definition content on the ROI and standard definition content in non-ROI.

In another aspect of the present disclosure, a non-transitory computer readable medium is disclosed. The non-transitory computer readable medium includes instructions stored thereon that when processed by a processor cause a device to perform operations comprising detecting the current eye position of a user. The operation also comprises identifying at least one region of interest (ROI) on a display screen of the display device based on the current eye position of the user. The operations further comprise predicting the next position of the eye based on at least one of the current eye position of the user or the at least one ROI and based on a rate of the movement of the eye of the user of a user profile of the user, the user profile defining the rate of movement of the eye of the user pre-learned based on relative motion of the eye of the user detected with respect to moving objects displayed on the display screen during transients. The operations furthermore comprise converting the SD video into a high definition (HD) video displayed on the ROI on the display screen associated with the current and next position of the eye, and displaying the HD video on the ROI of the display screen.

There is also provided a non-transitory computer readable medium including instructions stored thereon that when processed by at least one processor cause a system to perform operations comprising: detect current eye position of a user; identify at least one region of interest (ROI) on a display screen of the display device based on the current eye position of the user; predict next position of the eye based on at least one of the current eye position of the user or the at least one ROI and based on a rate of the movement of the eye of the user of a user profile of the user, the user profile defining the rate of movement of the eye of the user pre-learned based on relative motion of the eye of the user detected with respect to moving objects displayed on the display screen during transients; convert the SD video into a high definition (HD) video displayed on the ROI on the display screen associated with the current and next position of the eye; and display the HD video on the ROI of the display screen.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of device or system and/or methods in accordance with embodiments of the present subject matter are now described, by way of example only, and with reference to the accompanying figures, in which:
**Fig. 1** illustrates a block diagram of an exemplary display device for dynamically controlling quality of a video displaying on a display associated to an electronic device, in accordance with some embodiments of the present disclosure;
**Fig. 2A** illustrates an exemplary block diagram of a conversion module in accordance with some embodiments of the present disclosure;
**Fig. 2B** illustrates an example for dynamically controlling quality of a video displaying on a display device in accordance with some embodiments of the present disclosure;
**Fig. 3** shows a flowchart illustrating a method for dynamically controlling quality of a video displaying on a display associated to an electronic device in accordance with some embodiments of the present disclosure; and
**Fig. 4** illustrates a block diagram of an exemplary computer system for implementing embodiments consistent with the present disclosure.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiments thereof have been shown by way of example in the drawings and will be described in detail below. It should be understood, however that it is not intended to limit the disclosure to the particular forms disclosed but, on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a device or system or apparatus preceded by "comprises... a" does not, without more constraints, preclude the existence of other elements or additional elements in the device or system or apparatus.

Embodiments of the present disclosure are related to a method and a display device for dynamically controlling quality of a video displaying on a display associated with an electronic device. The device detects the current eye position of a user and identifies at least one region of interest (ROI) on a display screen of the display device. The display device predicts the next position of the eye, converts the SD video into a high definition (HD) video displayed on the ROI on the display screen associated with the current and next position of the eye; and displays the high definition video on the ROI of the display screen.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

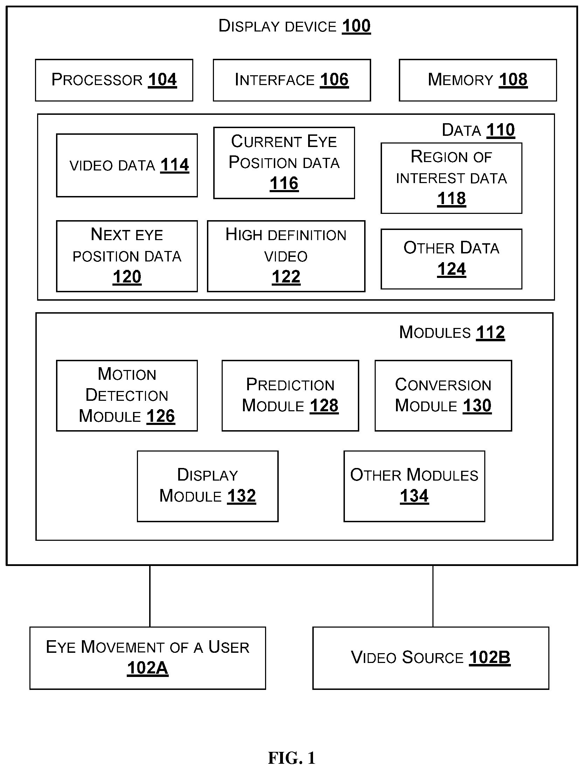

**Fig. 1** illustrates a block diagram of an exemplary display device 100 for dynamically controlling quality of a video displaying on a display screen in accordance with some embodiments of the present disclosure. The display device **100** monitors the eye position of a user through a motion sensor, in one embodiment of the present disclosure. It may be understood by a person skilled in the art that any other sensor can be used with the method of the present disclosure.

The display device **100** may include at least one central processing unit ("CPU" or "processor") **104** and a memory **108** storing instructions executable by the at least one processor **104.** The processor **104** may comprise at least one data processor for executing program components for executing user- or system-generated requests. A user may include a person, a person using a device such as those included in this disclosure, or such a device itself. The memory **108** is communicatively coupled to the processor **104.** In an embodiment, the memory **108** stores one or more eye position data associated with the user. The display device **100** further comprises an I/O interface **106.** The I/O interface **106** is coupled with the processor **104** through which the input is received.

In an embodiment, one or more data **110** may be stored within the memory **108.** The one or more data **110** may include, for example, standard definition (SD) video data **114,** current eye position data **116,** region of interest (ROI) data **118,** next eye position data **120,** high definition (HD) video data **122** and other data **124.**

The video data **114** is displayed on the display screen of the display device. The video data **114** is received from a video source. In one embodiment, the video source is a standard definition video source. The video data comprises a plurality of SD images also referred as SD frames.

The current eye position data **116** is associated with a user's eye movement or also referred to as dwell position. The current eye position is detected using an optical eye tracking technique, such as, but not limited to, video oculography, pattern mapping and gaze based interface.

The region of interest (ROI) data **118** is associated with the user focusing on the display screen using the eye movement. The ROI is obtained based on the current eye position of the user focusing on the display screen of the display device. In one embodiment, a binary space partitioning technique is used to obtain the eye direction vector onto the display screen space, by a user, thereby obtaining the ROI.

The next eye position data **120** is associated with the prediction of the next eye position of the user, focusing on the display screen. The next eye position of the user is also referred to as the next dwelling position.

The high definition (HD) video data **122** is data associated with converted images with improved quality on the ROI. The SD video is converted into the HD video and displayed on the display screen of the display device.

In an embodiment, the data **110** in the memory **108** is processed by the modules **112** of the processor **104.** The modules **112** may be stored within the memory **108.** Also, the modules can be implemented in any suitable hardware, software, firmware, or combination thereof.

In one implementation, the modules may include, for example, a motion detection module **126,** a prediction module **128,** a conversion module **130,** and a display module **132.** The display device **100** may also comprise other modules **134** to perform various miscellaneous functionalities of the device **100.** It will be appreciated that such aforementioned modules may be represented as a single module or a combination of different modules.

In an embodiment, the motion detection module **126** also referred to as the motion detector of the display device **100** detects the eye movement of the user. In an example embodiment, when a user is watching a video or image displayed on a display screen of the display device **100,** the motion detector **126** detects the eye movement. The detected eye movement is recorded as the current eye position, which is also referred as the current dwell position of the eye.

The motion detection module **126** detects the current eye position using an optical eye tracking technique, such as, but not limited to, video oculography, pattern mapping and gaze based interface. In one embodiment of detecting the current eye position using video oculography, an infrared light is reflected from the eye and sensed by at least one of a video camera and an optical sensor. The information or data is analyzed to extract eye rotation from changes in reflections of the infrared light. This information comprises the current eye position data.

In one embodiment by using pattern mapping, the eye movement is recorded by way of video or photographing continuously. The variation in size and shape of the sclera, i.e. the white region of the eye, and pupil, the black region of eye, are fed to a pattern mapping algorithm to obtain the eye rotation and look direction vector in 3-dimention (3D). In one embodiment, the current eye position is identified using a gaze based interface for analyzing human eye gaze behaviors to reveal characteristics of human communication and cognition.

The ROI is obtained based on the current eye position of the user focusing on the display screen of the display device. The other region of the display screen is non-ROI. In one embodiment, a binary space partitioning technique is used by the motion detection module **126** to obtain the eye direction vector onto the display screen space by a user, thereby obtaining the ROI.

The motion prediction module **128** predicts the next eye position of the user, focusing on the display screen. The next eye position of the user is also referred as the next dwelling position. The motion prediction module **128** predicts the next position of the eye, also referred as the next dwell position of the eye, based on at least one of the current eye position of the user and the ROI. The next dwell position of the eye may be predicted using an artificial neural network based on at least one input, such as, but not limited to, the present coordinates on the display screen, the degree of motion or motion vectors in the neighboring pixels or objects, a scene change or a change in frame and a change in color.

In one embodiment, the motion prediction module **128** predicts the next eye position based on user profile data. The motion prediction module **128** is configured with a plurality of users' profile data. Based on a specific user, the display device tracks the eye movement for a predetermined time with respect to the objects or scene displayed on the display screen. For example, a user's eyes may dwell on a war scene which includes the killing and crying of people. The motion prediction module **128** uses the relative motion of the eye with respect to the moving objects displayed, which plays a significant role in the quality of the video. The eye movement and rate of eye movement of different users are different, based on the moving objects on the displayed screen. The motion prediction module **128** is configured to learn the rate of movement of the eye(s) for each user during transients, based on the detected eye movement by the motion detection module **126** to predict the next eye position and temporal resolution, i.e. number of HD frames required during the transition. During the transition, the next eye position and the number of HD frames required or desired at the ROI are combined, and rendered with higher frame rates.

In one embodiment, as a human eye may not focus to a point on the display but to a small region, the motion prediction module **128** is configured with a threshold to overcome the aberration of the human eye. The motion prediction module **128** performs a consistent shift of at least 3 pixels in the plurality of frames, and it may take four or five frames before shifting or moving of the eye focus to the next point. The motion prediction module **128** uses motion vectors of the ROI to compute the eye focus position or gaze position.

Also, the motion prediction module **128** predicts which part of an image or frame of a video is to be coded in high definition (HD) in the next frame using at least one available resource such as, but not limited to, bandwidth, and processing power. In one example embodiment, at the network level in a live video chat scenario, the video packets that fall within the ROI may be assigned with high priority, relative to other packets in other parts of the scene.

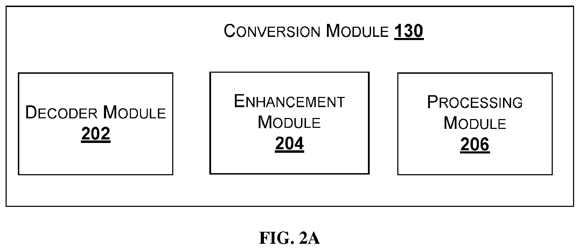

The conversion module **130** converts each image of the SD video into a high definition video, i.e. image of high definition (HD), at the ROI on the display screen. The sub modules of the conversion module **130** are illustrated in **Fig. 2A****.** The sub modules of the conversion module **128** comprise a decoder module **202,** an enhancement module **204** and a processing module **206.**

The decoder module **202** comprises a standard definition decoder providing for a reduced resolution. In one embodiment, the decoder module **202** supports frame rates of at least one of 24 frames per second (fps) and 30 fps. In one embodiment, decoder module **202** is configured with one of Sobel filtering and Frangi filtering for extracting the objects or frames of the SD video. After the extraction of the frames corresponding to the SD video, the conversion of SD into HD video is performed. The conversion of SD video into HD comprises up sampling of images with multiple reference frames referred as super resolution.

The conversion from SD to HD comprises interpolation of pixels by performing spatial up sampling, estimating motion vectors of the ROI for estimating the next predicted position. Based on the next predicted position, weightage is assigned for the image in that direction and frames are temporally interpolated to virtually enhance the frame rate. The ROI as well as the ROI in the next image or frame are rendered with higher frame rates with temporal interpolation to facilitate a smoother transition so that only the ROI will be rendered with high frame rates in the backdrop of SD video. The non ROI may be rendered with low frame rates compared to the frame rates of the ROI. Thus, the decoder module **202** provides each image having HD at the ROI, converting the SD video into HD video.

The enhancement module **204** receives a plurality of images associated with the converted HD video from the conversion module **202.** The enhancement module **204** enhances the image quality of each of the plurality of images in the converted HD video by performing a filtering operation to remove noise from the plurality of images. The filtering process is performed by at least one of the filters such as, but not limited to, a Weiner filter and a Gaussian filter.

The processing module **206** receives the enhanced plurality of images associated with the converted HD video. The processing module **206** performs post processing on the enhanced images for rendering high resolution content at the ROI. The non-ROI region has a low resolution or quality compared to the ROI. Thus, the content in the region of user attention is rendered with high quality (low quantization step). The rest of the display screen may have lower resolution and the overall bit rate required to improve the quality of video being displayed is low.

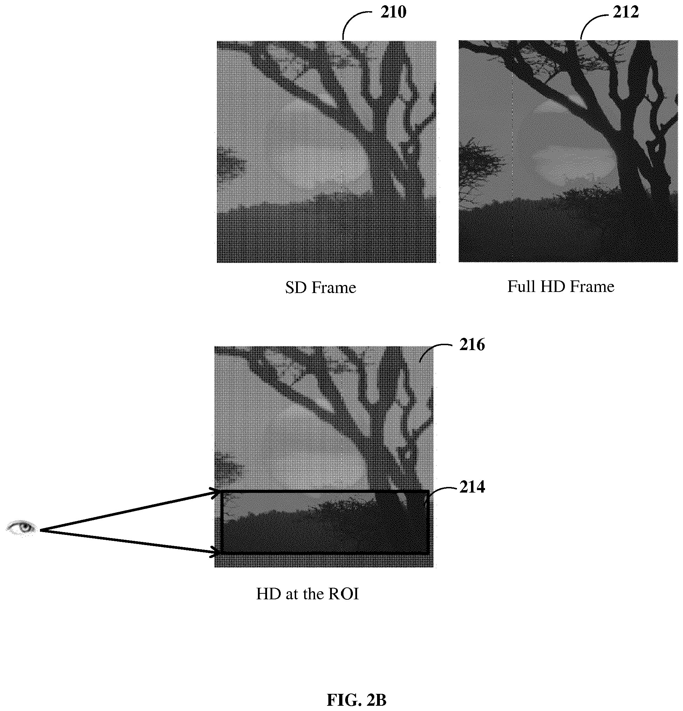

Referring back to **Fig. 1****,** the display device **100** comprises a display module **132** to display the high resolution video content at the ROI to which the user attention is rendered. This is shown in **Fig. 2B****,** illustrating an example for dynamically controlling the quality of a video displaying on **a** display device. As shown in **Fig. 2B****,** an image **210** is an SD frame or image, an image **212** is a HD image or frame and an image or frame **216** is displayed on the display screen of the display device, which comprises HD content at the ROI **214,** where the user focuses on the display screen.

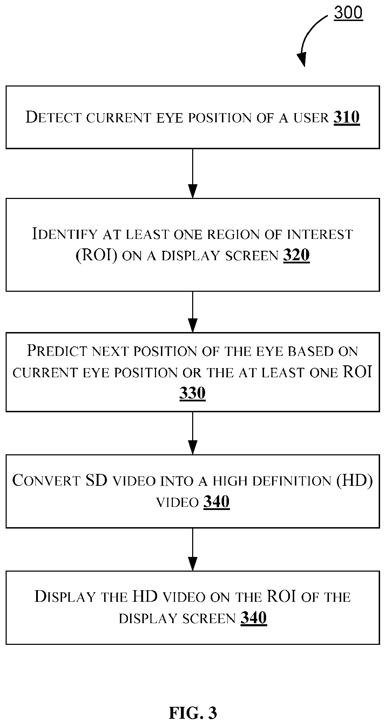

**Fig. 3** shows a flowchart illustrating a method for dynamically controlling the quality of a video displaying on a display associated with an electronic device in accordance with some embodiments of the present disclosure.

As illustrated in **Fig. 3****,** the method **300** comprises one or more blocks for displaying a video by dynamically controlling the quality of a video displaying on a display associated with an electronic device. The method **300** may be described in the general context of computer executable instructions. Generally, computer executable instructions can include routines, programs, objects, components, data structures, procedures, modules, and functions, which perform particular functions or implement particular abstract data types.

The order in which the method **300** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At **block 310,** the current eye position of a user is detected. In an embodiment, the motion detection module **126** of the display device **100** detects the eye movement of the user. For example, when a user is watching a video or image on a display screen or monitor of the display device **100,** the motion detector **126** detects the eye movement, which is recorded as the current eye position or also referred to as the current dwell position of the eye.

At **block 320,** at least one region of interest (ROI) on the display screen of the display device is identified. In one embodiment, the ROI on the display is identified based on the eye movement of the user using a binary space partitioning technique.

At **block 330,** the next position of the eye, also referred to as the next dwell position of the eye, is predicted based on at least one of the current eye position of the user or the at least one ROI. The next dwell position of the eye may be predicted using an artificial neural network based on at least one input such as, but not limited to, present coordinates on the display screen, the degree of motion or motion vectors in the neighboring pixels or objects, a scene change or a change in frame and a change in color. In one embodiment, the prediction of the next position of the eye is based on a personal profile of the user. Depending upon the user, the display device system observes the eye movement for a predetermined time with respect to the objects or scene displayed on the display screen. For example, a user's eyes may dwell on a war scene which includes the killing and crying of people. This involves the relative motion of the eye with respect to the moving objects displayed, which plays a significant role in the quality of the video. Different users' eye movement is different and rate of eye movement is also different based on the moving objects on the displayed screen. The display device is configured to learn the rate of movement of the eye for each user during transients and considers the same during the prediction step at block **330.**

At **block 340,** the standard definition (SD) video is converted into a high definition (HD) video displayed on the ROI on the display screen associated with the current and next position of the eye. In one embodiment, decoder module **202** is configured with one of Sobel filtering and Frangi filtering for extracting the objects or frames of the SD video. After the extraction of the frames corresponding to the SD video, the conversion of SD into HD video is performed. The conversion of SD video into HD essentially involves up sampling of images with multiple reference frames, referred as super resolution. The conversion comprises interpolation of pixels by performing spatial up sampling, estimating motion vectors of the ROI for estimating the next predicted position. Based on the next predicted position, weightage is assigned for the image in that direction and frames are temporally interpolated to virtually enhance the frame rate. The ROI of interest as well as the ROI in the next image or frame are rendered with higher frame rates with temporal interpolation to facilitate a smoother transition so that only the ROI will be rendered with high frame rates in the backdrop of SD video.

Next, the image quality of the ROI is enhanced by a filtering process for the removal of noise. The filtering process is performed by at least one of the filters such as, but not limited to, a Weiner filter and a Gaussian filter. Thereafter, post processing is performed on the enhanced image for rendering high resolution content at the determined ROI. The non-ROI region has low resolution or quality compared to the ROI.

At **block 350,** the images associated with the video are displayed on the display screen, wherein the image quality on the ROI is high which is HD and the non ROI has SD quality.

Thus, the method and the device provide for dynamically controlling the quality of a video being displayed on a display associated with an electronic device.

### Computer System

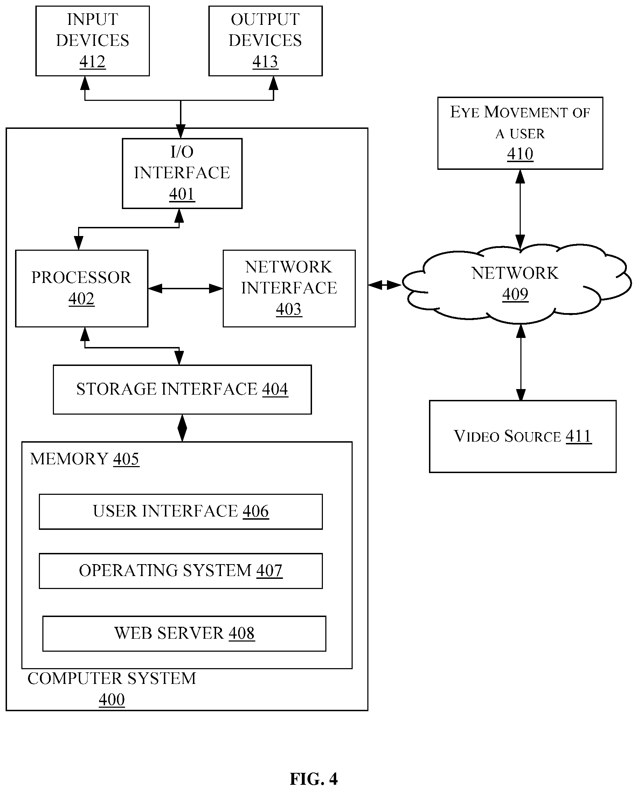

**Figure 4** illustrates a block diagram of an exemplary computer system **400** for implementing embodiments consistent with the present disclosure. In an embodiment, the computer system **400** is used to implement the display device **100.** The computer system **400** is for dynamically controlling the quality of a video displaying on a display. The computer system **400** may comprise a central processing unit ("CPU" or "processor") **402.** The processor **402** may comprise at least one data processor for executing program components for executing user- or system-generated business processes. A user may include a person, a person using a device such as such as those included in this disclosure, or such a device itself. The processor **402** may include specialized processing units such as integrated system (bus) controllers, memory management control units, floating point units, graphics processing units, digital signal processing units, etc.

The processor **402** may be disposed in communication with one or more input/output (I/O) devices **(412** and **413)** via I/O interface **401.** The I/O interface **401** may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface **401,** the computer system **400** may communicate with one or more I/O devices **(412** and **413).** For example, the input device **412** may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device **413** may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the processor **402** may be disposed in communication with a communication network **409** via a network interface **403.** The network interface **403** may communicate with the communication network **409.** The network interface **403** may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network **409** may include, without limitation, a direct interconnection, local area network (LAN), wide area network (WAN), wireless network (e.g., using Wireless Application Protocol), the Internet, etc. Using the network interface **403** and the communication network **409,** the computer system **400** may communicate with one or more network devices **410.**

In some embodiments, the processor **402** may be disposed in communication with a memory **405** (e.g., RAM, ROM, etc. not shown in **figure 4**) via a storage interface **404.** The storage interface **404** may connect to memory **405** including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **405** may store a collection of program or database components, including, without limitation, user interface application **406,** an operating system **407,** web server **408** etc. In some embodiments, computer system **400** may store user/application data **406,** such as the data, variables, records, etc. as described in this disclosure. Such databases may be implemented as fault-tolerant, relational, scalable, secure databases such as Oracle or Sybase.

The operating system **407** may facilitate resource management and operation of the computer system **400.** Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface may facilitate display, execution, interaction, manipulation, or operation of program components through textual or graphical facilities. For example, user interfaces may provide computer interaction interface elements on a display system operatively connected to the computer system 400, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system **400** may implement a web browser **408** stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system **400** may implement a mail server stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, nonvolatile memory, hard drives, CD ROMs, DVDs, flash drives, disks, and any other known physical storage media.

Advantages of the embodiments of the present disclosure are illustrated herein.

In an embodiment, the present disclosure provides a robust and adaptive high quality video content at rendering.

In an embodiment of the present disclosure, bandwidth requirement is reduced.

In an embodiment, the present disclosure provides enhanced user satisfaction of consumption of high quality video.

In an embodiment, the present disclosure provides high quality video ensured on the object being watched by the user.

In an embodiment, the present disclosure provides a new video format based on the ROI, high definition (HD) video in the ROI and standard definition (SD) video in the rest of the region (non-ROI) on a frame-by-frame basis, which may be subjected to a compression algorithm such as, but not limited to, MPEG.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may comprise media such as magnetic storage medium (e.g., hard disk drives, floppy disks, tape, etc.), optical storage (CD-ROMs, DVDs, optical disks, etc.), volatile and nonvolatile memory devices (e.g., EEPROMs, ROMs, PROMs, RAMs, DRAMs, SRAMs, Flash Memory, firmware, programmable logic, etc.), etc. Further, non-transitory computer-readable media comprise all computer-readable media except for a transitory. The code implementing the described operations may further be implemented in hardware logic (e.g., an integrated circuit chip, Programmable Gate Array (PGA), Application Specific Integrated Circuit (ASIC), etc.).

Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" comprises non-transitory computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the invention, and that the article of manufacture may comprise suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figure 3** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for dynamically controlling the quality of a video displaying on a display associated with an electronic device, comprising:
detecting (310), by a display device (100), the current eye position of a user;
identifying (320), by the display device (100), at least one region of interest "ROI" (214) on a display screen of the display device (100) based on the current eye position of the user;
predicting (330), by the display device (100), the next position of the eye based on at least one of the current eye position of the user or the at least one ROI and based on a rate of movement of the eye of the user of a user profile of the user, the user profile defining the rate of movement of the eye of the user pre-learned based on relative motion of the eye of the user detected with respect to moving objects displayed on the display screen during transients;
converting (340), by the display device (100), the video having a first definition into a video having a second, higher definition displayed on the ROI (214) on the display screen associated with the current and next position of the eye; and
displaying (340), by the display device (100), the second, higher definition video on the ROI (214) of the display screen.

2. The method of claim 1, wherein the video having the first definition comprises standard definition "SD" video.

3. The method of claim 1 or 2, wherein the video having the second, higher definition comprises high definition "HD" video.

4. The method as claimed in any one of claims 1 to 3, wherein detecting the current eye position of the user is performed by an at least one motion detector, using one of an optical eye tracking, a pattern mapping and a gaze-based interface technique.

5. The method as claimed in any one of claims 1 to 4, wherein identifying the at least one ROI (214) on the display screen is performed using a binary space partitioning method.

6. The method as claimed in any one of claims 1 to 5, further comprising displaying the video having the first definition or the SD video in the non-ROI of the display screen.

7. The method as claimed in any one of claims 1 to 6, wherein predicting the next position of the eye comprises:
receiving one or more parameters associated with the video having the first definition or the SD video displayed on the display screen and the user profile; and
predicting the next position of the eye using an artificial neural network based on the one or more parameters, the user profile, and at least one resource, the one or more parameters comprising present coordinates on the display screen, a plurality of motion vectors in one of neighboring pixels and objects, a frame color and a color change in the frames of the video having the first definition or the SD video;
the method further comprising obtaining one or more frames of the video having the first definition or the SD video based on the predicted next position of the eye.

8. The method as claimed in any one of claims 1 to 7, wherein converting the video having the first definition or the SD video into the video having the second, higher definition or the HD video comprises:
performing, by the display device (100), spatial up-sampling of at least one of a plurality of frames in the ROI and a plurality of frames in an at least one ROI associated with the next position of the eye.

9. The method as claimed in claim 8, wherein the spatial up-sampling of the plurality of frames is performed by an interpolating technique.

10. The method as claimed in claim 9, further comprising rendering the ROI and the at least one ROI associated with the next position of the eye with a higher frame rate than the non-ROI.

11. The method as claimed in any one of claims 1 to 10, further comprising processing the second, higher definition video for rendering higher definition content on the ROI and lower definition content in the non-ROI.

12. The method as claimed in claim 3, further comprising processing the HD video for rendering high definition content on the ROI and standard definition content in the non-ROI.

13. The method as claimed in any one of claims 1 to 12, wherein displaying the second, higher definition video or the HD video on the ROI (214) of the display screen comprises eliminating at least one of interference and noise in the second, higher definition video or the HD video.

14. A display device (100) for dynamically controlling the quality of a video, comprising:
a processor (104); and
a memory (108) communicatively coupled to the processor (104), wherein the memory (108) stores processor-executable instructions, which, on execution, cause the processor (104) to perform the method of any one of claims 1 to 13.

15. A non-transitory computer readable medium including instructions stored thereon that when processed by at least one processor (104) cause a system to perform the method of any one of claims 1 to 13.

## Patentansprüche

1. Verfahren zum dynamischen Steuern der Qualität eines Anzeigens eines Videos auf einer mit einer elektronischen Einheit verbundenen Anzeige, das umfasst:
ein Ermitteln (310) der aktuellen Augenstellung eines Benutzers durch eine Anzeigeeinheit (100);
ein Ermitteln (320) durch die Anzeigeeinheit (100) mindestens eines Bereichs von Interesse "ROI" (214) auf einem Anzeigebildschirm der Anzeigeeinheit (100) auf Grundlage der aktuellen Augenstellung des Benutzers;
ein Vorhersagen (330) der nächsten Stellung des Auges auf Grundlage von mindestens entweder der aktuellen Augenstellung des Benutzers oder der mindestens einen ROI und auf Grundlage einer Bewegungsgeschwindigkeit des Auges des Benutzers eines Benutzerprofils des Benutzers durch die Anzeigeeinheit (100), wobei das Benutzerprofil die Bewegungsgeschwindigkeit des Auges des Benutzers definiert, die auf Grundlage von Relativbewegung des Auges des Benutzers vorgelernt wird, die in Bezug auf auf dem Anzeigebildschirm während Transienten dargestellte bewegte Objekte erfasst wird;
ein Umwandeln (340) des Videos mit einer ersten Auflösung in ein Video mit einer zweiten, höheren Auflösung, die auf der ROI (214) auf dem Anzeigebildschirm dargestellt wird, der der aktuellen und nächsten Stellung des Auges zugehörig ist, durch die Anzeigeeinheit (100); und
ein Anzeigen (340) des zweiten Videos mit höherer Auflösung auf der ROI (214) des Anzeigebildschirms durch die Anzeigeeinheit (100).

2. Verfahren nach Anspruch 1, wobei das Video mit der ersten Auflösung ein "SD"-Video mit Standardauflösung umfasst.

3. Verfahren nach Anspruch 1 oder 2, wobei das Video mit der zweiten, höheren Auflösung ein "HD"-Video mit Hochauflösung umfasst.

4. Verfahren nach einem der Ansprüche 1 bis 3, wobei ein Ermitteln der aktuellen Augenstellung des Benutzers durch mindestens einen Bewegungsdetektor ausgeführt wird, der entweder ein optisches Eye-Tracking, eine Musterzuordnung oder eine blickberuhende Schnittstellentechnik verwendet.

5. Verfahren nach einem der Ansprüche 1 bis 4, wobei ein Ermitteln der mindestens einen ROI (214) auf dem Anzeigebildschirm durch Verwenden eines binären Raumpartitionierungsverfahrens ausgeführt wird.

6. Verfahren nach einem der Ansprüche 1 bis 5, das des Weiteren ein Anzeigen des Videos mit der ersten Auflösung oder des SD-Videos in der Nicht-ROI des Anzeigebildschirms umfasst.

7. Verfahren nach einem der Ansprüche 1 bis 6, wobei ein Vorhersagen der nächsten Stellung des Auges umfasst:
ein Empfangen eines oder mehrerer Parameter, die dem Video mit der ersten Auflösung oder dem SD-Video zugehörig sind, das auf dem Anzeigebildschirm und dem Benutzerprofil dargestellt wird; und
ein Vorhersagen der nächsten Stellung des Auges durch Verwenden eines künstlichen neuronalen Netzwerks auf Grundlage des einen oder der mehreren Parameter, des Benutzerprofils und mindestens einer Ressource, wobei der eine oder die mehreren Parameter auf dem Anzeigebildschirm vorhandene Koordinaten, eine Vielzahl von Bewegungsvektoren in einem von benachbarten Pixeln und Objekten, eine Einzelbildfarbe und eine Farbänderung in den Einzelbildern des Videos mit der ersten Auflösung oder dem SD-Video umfassen;
wobei das Verfahren des Weiteren ein Erhalten eines oder mehrerer Einzelbilder des Videos mit der ersten Auflösung oder des SD-Videos auf Grundlage der vorhergesagten nächsten Stellung des Auges umfasst.

8. Verfahren nach einem der Ansprüche 1 bis 7, wobei ein Umwandeln des Videos mit der ersten Auflösung oder des SD-Videos in das Video mit der zweiten, höheren Auflösung oder das HD-Video umfasst:
ein Ausführen einer räumlichen Abtastratenerhöhung von mindestens einem aus einer Vielzahl von Einzelbildern in der ROI und einer Vielzahl von Einzelbildern in einer mindestens einer der nächsten Stellung des Auges zugehörigen ROI durch die Anzeigeeinheit (100).

9. Verfahren nach Anspruch 8, wobei die räumliche Abtastratenerhöhung der Vielzahl von Einzelbildern durch eine Interpolationstechnik ausgeführt wird.

10. Verfahren nach Anspruch 9, das des Weiteren eine Wiedergabe der ROI und der mindestens einen ROI umfasst, die der nächsten Stellung des Auges mit einer höheren Einzelbildrate als der Nicht-ROI zugehörig ist.

11. Verfahren nach einem der Ansprüche 1 bis 10, das des Weiteren ein Verarbeiten des zweiten Videos höherer Auflösung zum Wiedergeben von Inhalt höherer Auflösung auf der ROI und Inhalt niedrigerer Auflösung in der Nicht-ROI umfasst.

12. Verfahren nach Anspruch 3, das des Weiteren ein Verarbeiten des HD-Videos zum Wiedergeben von Hochauflösungsinhalt auf der ROI und Standardauflösungsinhalt in der Nicht-ROI umfasst.

13. Verfahren nach einem der Ansprüche 1 bis 12, wobei ein Anzeigen des zweiten Videos höherer Auflösung oder des HD-Videos auf der ROI (214) des Anzeigebildschirms ein Beseitigen mindestens entweder einer Störung oder eines Rauschens in dem zweiten Video höherer Auflösung oder dem HD-Video umfasst.

14. Anzeigeeinheit (100) zum dynamischen Steuern der Qualität eines Videos, die umfasst:
einen Prozessor (104);
und einen Speicher (108), der kommunikativ mit dem Prozessor (104) verbunden wird, wobei der Speicher (108) prozessorausführbare Anweisungen speichert, die bei Ausführung den Prozessor (104) veranlassen, das Verfahren nach Anspruch 1 bis 13 auszuführen.

15. Nichtflüchtiges, computerlesbares Medium einschließlich darauf gespeicherter Anweisungen, die ein System veranlassen, das Verfahren nach Anspruch 1 bis 13 auszuführen, wenn sie durch mindestens einen Prozessor (104) verarbeitet werden.

## Revendications

1. Procédé de commande dynamique de la qualité d'une vidéo s'affichant sur un affichage associé à un dispositif électronique, comprenant :
la détection (310), par un dispositif d'affichage (100), de la position d'oeil actuelle d'un utilisateur ; l'identification (320), par le dispositif d'affichage (100), d'au moins une zone d'intérêt «ROI» (214) sur un écran d'affichage du dispositif d'affichage (100) sur la base de la position d'oeil actuelle de l'utilisateur ;
la prédiction (330), par le dispositif d'affichage (100), de la position suivante de l'oeil sur la base d'au moins l'une de la position d'oeil actuelle de l'utilisateur ou l'au moins une ROI et sur la base du taux de déplacement de l'oeil d'un profil d'utilisateur de l'utilisateur, le profil d'utilisateur définissant le taux de déplacement de l'oeil de l'utilisateur pré-appris sur la base d'un déplacement relatif de l'oeil de l'utilisateur détecté par rapport à des objets en mouvement affichés sur l'écran d'affichage pendant des transitions ;
la conversion (340), par le dispositif d'affichage (100), de la vidéo ayant une première définition en une vidéo ayant une deuxième définition plus haute affichée sur la ROI (214) sur l'écran d'affichage associé avec la position actuelle et suivante de l'oeil ;
et l'affichage (340), par le dispositif d'affichage (100), de la deuxième vidéo plus haute définition sur la ROI (214) de l'écran d'affichage.

2. Procédé selon la revendication 1, dans lequel la vidéo ayant la première définition comprend une vidéo de définition standard « SD ».

3. Procédé selon la revendication 1 ou 2, dans lequel la vidéo ayant la deuxième définition plus haute comprend une vidéo haute définition « HD ».

4. Procédé selon l'une quelconque des revendications 1 à 3, dans lequel la détection de la position d'oeil actuelle de l'utilisateur est réalisée par au moins un détecteur de mouvement, en utilisant l'une d'une technique de suivi d'oeil optique, de mappage de schéma et d'interface basée sur le regard.

5. Procédé selon l'une quelconque des revendications 1 à 4, dans lequel l'identification de l'au moins une ROI (214) sur l'écran d'affichage est réalisée en utilisant un procédé de partitionnement d'espace binaire.

6. Procédé selon l'une quelconque des revendications 1 à 5, comprenant en outre l'affichage de la vidéo ayant la première définition ou la vidéo SD dans une zone non-ROI de l'écran d'affichage.

7. Procédé selon l'une quelconque des revendications 1 à 6, dans lequel la prédiction de la position suivante de l'oeil comprend :
la réception d'un ou plusieurs paramètres associés à la vidéo ayant la première définition ou la vidéo SD affichée sur l'écran d'affichage et le profil d'utilisateur ; et la prédiction de la position suivante de l'oeil en utilisant un réseau neuronal artificiel sur la base de l'un ou plusieurs paramètres, du profil d'utilisateur, et d'au moins une ressource, l'un ou plusieurs paramètres comprenant des coordonnées présentes sur l'écran d'affichage, une pluralité de vecteurs de mouvement dans l'un de pixels et objets voisins, une couleur de trame et un changement de couleur dans les trames de la vidéo ayant la première définition ou la vidéo SD ;
le procédé comprenant en outre l'obtention d'une ou plusieurs trames de la vidéo ayant la première définition ou la vidéo SD sur la base de la position suivante prédite de l'oeil.

8. Procédé selon l'une quelconque des revendications 1 à 7, dans lequel la conversion de la vidéo ayant la première définition ou la vidéo SD dans la vidéo ayant la deuxième définition plus haute ou la vidéo HD comprend :
l'exécution, par le dispositif d'affichage (100), d'un sur-échantillonnage spatial d'au moins l'une d'une pluralité de trames dans la ROI et d'une pluralité de trames dans au moins une ROI associée à la position suivante de l'oeil.

9. Procédé selon la revendication 8, dans lequel le sur-échantillonnage spatial de la pluralité de trames est exécuté par une technique d'interpolation.

10. Procédé selon la revendication 9, comprenant en outre la restitution de la ROI et l'au moins une ROI associée à la position suivante de l'oeil avec un taux de trame plus haut que la non-ROI.

11. Procédé selon l'une quelconque des revendications 1 à 10, comprenant en outre le traitement de la deuxième vidéo plus haute définition pour restituer un contenu plus haute définition sur la ROI et un contenu plus basse définition dans la non-ROI.

12. Procédé selon la revendication 3, comprenant en outre le traitement de la vidéo HD pour restituer un contenu haute définition sur la ROI et un contenu à définition standard dans la non-ROI.

13. Procédé selon l'une quelconque des revendications 1 à 12, dans lequel l'affichage de la deuxième vidéo plus haute définition ou la vidéo HD sur la ROI (214) de l'écran d'affichage comprend l'élimination d'au moins l'un d'une interférence et d'un bruit dans la deuxième vidéo plus haute définition ou la vidéo HD.

14. Dispositif d'affichage (100) destiné à commander dynamiquement la qualité d'une vidéo, comprenant :
un processeur (104) ;
et une mémoire (108) couplée de manière communicante au processeur (104), dans lequel la mémoire (108) stocke des instructions exécutables par un processeur, qui, à l'exécution, amènent le processeur (104) à exécuter le procédé selon l'une quelconque des revendications 1 à 13.

15. Support non-transitoire lisible par ordinateur sur lequel sont stockées des instructions, lesquelles une fois exécutées par au moins un processeur (104), amènent un système à mettre en oeuvre le procédé selon l'une quelconque des revendications 1 à 13.
